# EUROPEAN PATENT APPLICATION

(11) **EP 4 752 493 A1**
(43) Date of publication of application: **03.06.2026**
(21) Application number: 25838422.1
(22) Date of filing: 05.08.2025
(51) Int. Cl.: F41A 31/00, G06T 7/11, G06N 3/08, G06F 18/21, H04N 23/68, G06T 5/50, G06T 19/20

(54) **METHOD AND APPARATUS FOR CALCULATING POSITION AND DIRECTION OF FIREARM USING IMAGE ANALYSIS**

(30) Priority: 07.10.2024 KR 20250135501
(71) Applicant: Fakeeyes Co., Ltd., Mapo-gu Seoul 03925 (KR)
(72) Inventor: KIM, Seok Joong, Seoul 08770 (KR); KIM, Younghoon, Yongin-si, Gyeonggi-do 16822 (KR); KIM, Sanghoon, Seongnam-si, Gyeonggi-do 13600 (KR)
(74) Representative: RGTH
(86) International application number: PCT/IB2025/057950
(87) International publication number: WO 2026/078458

(57) **Abstract**

Disclosed are a method for calculating the position and direction of a firearm using image analysis and an apparatus for supporting the same. The method for calculating the position and direction of a firearm using image analysis according to one embodiment of the present invention may include obtaining respective image frames from a plurality of image sensors configured to capture images of the same expected point of shock wave generation from different positions in different directions; generating two-dimensional barrel recognition information of a firearm from each of the image frames; and calculating a three-dimensional position of a muzzle of the firearm and a three-dimensional firing direction based on position and direction information of the image sensors and the two-dimensional barrel recognition information generated from each of the image frames.

## Description

### [Technical Field]

The present invention relates to a method and an apparatus for calculating the position and direction of a firearm using image analysis.

### [Background]

The contents that will be described below simply provide background information related to one embodiment of the present invention without constituting the related art.

Firearms and artillery include various projectile weapons used in military operations. They include large weapons such as cannons, mortar, rocket launchers, and self-propelled guns, as well as small weapons such as small-sized firearms (e.g., guns). Shock waves generated from these weapons occur at the moment of firing, and its accurate detection and analysis is essential for weapon performance evaluation, safety inspection, real-time monitoring, and operational planning.

A conventional shock wave detection system mainly detects shock waves by using an acoustic sensor, an accelerometer, or the like. Such a system effectively operates in a specific environment, but has a disadvantage in that installation and maintenance are complicated and expensive. In addition, detection performance may vary depending on various types of firearms, artillery, and environmental conditions.

Recently, a method for detecting a shock wave using an image sensor has attracted attention as a new alternative. The image sensor may collect non-contact data with high resolution and may be used in a wide range of environments. In particular, the image sensor may detect and analyze, in real time, a visual pattern of shock waves generated when small-sized firearms as well as large-sized artillery are fired, thereby providing more accurate and reliable data.

However, a conventional shock wave detection system using an image sensor still remains in an initial stage, and needs to be improved in terms of reliability and accuracy. For example, there is a technical problem of processing data of the image sensor in real time, effectively removing noise, and accurately classifying various types of shock waves.

In addition, the shock wave detection system using the image sensor frequently causes an image distortion problem. This distortion is caused by a position or angle of the sensor and external environmental factors (e.g., lighting, weather), and a distorted image may interfere with an accurate analysis of the shock wave. When image distortion is not effectively corrected, the reliability and accuracy of the shock wave detection may be greatly reduced, and thus, it is also an important task to secure a correction method capable of collecting accurate shock wave data without image distortion even in various environments.

### [Disclosure]

### [Technical Problem]

An object of the present invention is to provide a method and an apparatus for calculating the position and direction of a firearm using image analysis, thereby solving existing problems and implementing a firearm position and direction information system with higher accuracy and enhanced responsiveness to environmental changes.

### [Technical Solution]

To achieve the above-mentioned object, a method for calculating the position and direction of a firearm using image analysis according to one embodiment of the present invention may include obtaining respective image frames from a plurality of image sensors configured to capture images of the same expected point of shock wave generation from different positions in different directions; generating two-dimensional barrel recognition information of a firearm from each of the image frames; and calculating a three-dimensional position of a muzzle of the firearm and a three-dimensional firing direction based on position and direction information of the image sensors and the two-dimensional barrel recognition information generated from each of the image frames.

The obtaining of the image frames may include obtaining image frames corresponding to the same time point from the image sensors.

The obtaining of the image frames may include obtaining an image frame corresponding to a time point at which a shockwave is determined to have been generated based on at least one of the image sensors.

The obtaining of the image frames may include, after obtaining image frames in real time from an image sensor installed to face the expected point of shock wave generation, generating difference data between a plurality of frames having time intervals based on the image frames; calculating a shockwave indication value from the difference data based on an artificial intelligence learning model for shockwave detection; and determining whether a shockwave has occurred at the expected point of shock wave generation based on the shockwave indication value.

The generating of the two-dimensional barrel recognition information may include recognizing the firearm in each of the image frames; and recognizing a barrel among regions corresponding to the firearm in each of the image frames.

The generating of the two-dimensional barrel recognition information may include, after recognizing the firearm, cropping a portion corresponding to the firearm in the image frame; and upscaling the cropped image.

The generating of the two-dimensional barrel recognition information may include calculating a two-dimensional inclination angle of the barrel and a two-dimensional coordinate corresponding to a muzzle based on a region corresponding to the barrel in each of the image frames.

The calculating of the three-dimensional position and three-dimensional firing direction of the muzzle may include combining the two-dimensional inclination angles of the barrel calculated from each of the image frames to calculate a three-dimensional vector indicating the firing direction of the firearm, and combining the two-dimensional coordinate of the muzzle calculated from each of the image frames to calculate a three-dimensional coordinate indicating the muzzle position of the firearm.

The calculating of the three-dimensional position and three-dimensional firing direction of the muzzle may include combining the two-dimensional barrel recognition information generated from each of the image frames to generate a three-dimensional barrel object of the firearm; and calculating a three-dimensional vector indicating the firing direction of the firearm and a three-dimensional coordinate indicating the muzzle position of the firearm based on the three-dimensional barrel object.

In addition, an apparatus for calculating the position and direction of a firearm using image analysis according to an embodiment of the present invention includes a memory in which at least one program is recorded and a processor for executing the program, wherein the program includes instructions for: obtaining respective image frames from a plurality of image sensors configured to capture images of the same expected point of shock wave generation from different positions in different directions; generating two-dimensional barrel recognition information of a firearm from each of the image frames; calculating a three-dimensional position of a muzzle of the firearm and a three-dimensional firing direction based on position and direction information of the image sensors and the two-dimensional barrel recognition information generated from each of the image frames; and providing firearm position and direction information using image analysis through a user application.

### [Advantageous Effects]

According to the present invention, it can be possible to accurately determine whether a shock has been generated or not by collecting image frames in real time through an image sensor, generating difference data between a plurality of frames, and calculating a shock wave indication value with an artificial intelligence model.

In addition, according to the present invention, it can be possible to provide a method and an apparatus for detecting a shock wave using an image sensor, which analyzes a point of shock wave generation and a traveling direction thereof using a multiple image sensor, and reflects image shaking to increase the accuracy of shock wave detection.

Further, according to the present invention, it can be possible to provide a method and an apparatus for calculating the position and direction of a firearm using image analysis by obtaining respective image frames from a plurality of image sensors, generating two-dimensional barrel recognition information of a firearm, and calculating a three-dimensional position of the muzzle and a three-dimensional firing direction of the firearm by utilizing position and direction information of the image sensors and the two-dimensional barrel recognition information generated from each of the image frames.

Furthermore, according to the present invention, it can be possible to provide a calibration method and an apparatus for a plurality of image sensors by obtaining respective image frames from a plurality of image sensors, generating two-dimensional marker recognition information of a calibration structure, calculating position and direction information of each of the image sensors based on the two-dimensional marker recognition information and three-dimensional reference coordinates predefined corresponding to the calibration structure, and performing image distortion correction of each of the image sensors based on the two-dimensional marker recognition information generated from the image frames.

### [Description of Drawings]

FIG. 1 is a view showing main parts for image sensor calibration, shock wave detection, and calculation of position & direction of firearms according to one embodiment of the present invention.
FIG. 2 is an operational flowchart showing a process of image sensor calibration, shock wave detection, and calculation of position & direction of firearms according to one embodiment of the present invention.
FIG. 3 is an operational flowchart showing a method for detecting a shock wave using an image sensor according to one embodiment of the present invention.
FIG. 4 is an operational flowchart showing a method for detecting a shock wave using an image sensor according to another embodiment of the present invention.
FIG. 5 is a view for describing a process of generating difference data between image frames according to one embodiment of the present invention.
FIGS. 6 and 7 are views for describing a calibration structure according to one embodiment of the present invention.
FIG. 8 is an operational flowchart showing a calibration method of a plurality of image sensors according to one embodiment of the present invention.
FIG. 9 is an operational flowchart showing a calibration method of a plurality of image sensors according to another embodiment of the present invention.
FIG. 10 is an operational flowchart showing a method for calculating a position and direction of firearms using image analysis according to one embodiment of the present invention.
FIG. 11 is an operational flowchart showing a method for calculating a position and direction of firearms using image analysis according to another embodiment of the present invention.
FIG. 12 is a view for describing a process of generating barrel recognition information of firearms according to one embodiment of the present invention.
FIG. 13 is a view showing a computer system according to one embodiment of the present invention.

### [Mode for Invention]

The present invention will be described in detail with reference to the accompanying drawings as follows. Here, repeated descriptions as well as detailed descriptions of well-known functions and configurations that may unnecessarily obscure the subject matter of the present invention will be omitted. Embodiment forms of the present invention are provided to more completely explain the present invention to those of ordinary skill in the art. Thus, the shapes, sizes and the like of elements in the drawings may be exaggerated for clearer description.

Throughout the specification, when a part is referred to include a certain component, it means that the part may further include other components rather than excluding the other components, unless otherwise particularly specified.

Hereinafter, exemplary embodiments according to the present invention will be described in detail with reference to the accompanying drawings.

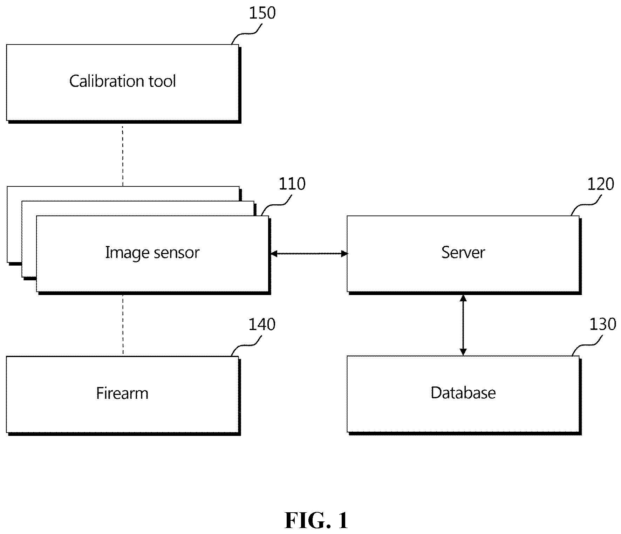

FIG. 1 is a view showing main parts for image sensor calibration, shock wave detection, and calculation of position & direction of firearms according to one embodiment of the present invention.

Referring to FIG. 1, image sensor calibration, shock wave detection, and calculation of position & direction of firearms according to one embodiment of the present invention may be performed by an image sensor 110, a server 120, a database 130, a firearm 140, and a calibration structure 150.

The image sensor 110 may be installed toward an expected point of shock wave generation to monitor the same in real time, collect an image frame, and transmit the same to the server 120. In addition, each of the image sensors 110 may collect image frames at different angles, based on which an artificial intelligence learning model for detecting a shock wave of the server 120 may more accurately analyze a point of shock wave generation and a direction thereof.

The calibration structure 150 may consist of a marker holder 611, a guide scale 613, and a disk 621, which are components. Each of image sensors 110 may detect two-dimensional marker recognition information at multiple angles through calibration from each image frame, and the server 120 may analyze the same to modify a position and direction between respective image sensors 110, thereby collecting accurate and consistent data.

The server 120 may include a computer system 1000 and analyze whether a shock wave has been generated or not and a point of generation in real time. In addition, the server 120 may analyze difference data between image frames by using the artificial intelligence learning model, and may process data integrated from the plurality of image sensors 110 to calculate a position, intensity and direction of shock wave generation.

The server 120 may analyze the image frame in real time to track a point of shock wave generation, and detect a position and direction of the firearm 140 that has generated a shock wave through difference data between image frames obtained at time intervals.

In addition, the server 120 may collect image frames at multiple angles by using the plurality of image sensors 110 at different angles, and may analyze the same to calculate a three-dimensional position and direction of the firearm 140. All of these processes may be performed in real time, and through this, the server 120 may precisely reconfigure the three-dimensional position and direction of the firearm 140 at the moment of firing of the firearm 140.

The database 130 may store and process the data processed by the server 120. Whether a shock wave has been generated or not, which is processed in real time by the server 120, and the data collected by each image sensor 110 may be stored in the database 130 and used for analysis or improvement in the future.

The firearm 140 may be a major cause of shock wave generation, and each of the image sensors 110 may obtain image frames including the shock wave generated at the moment of firing of the firearm 140 in real time.

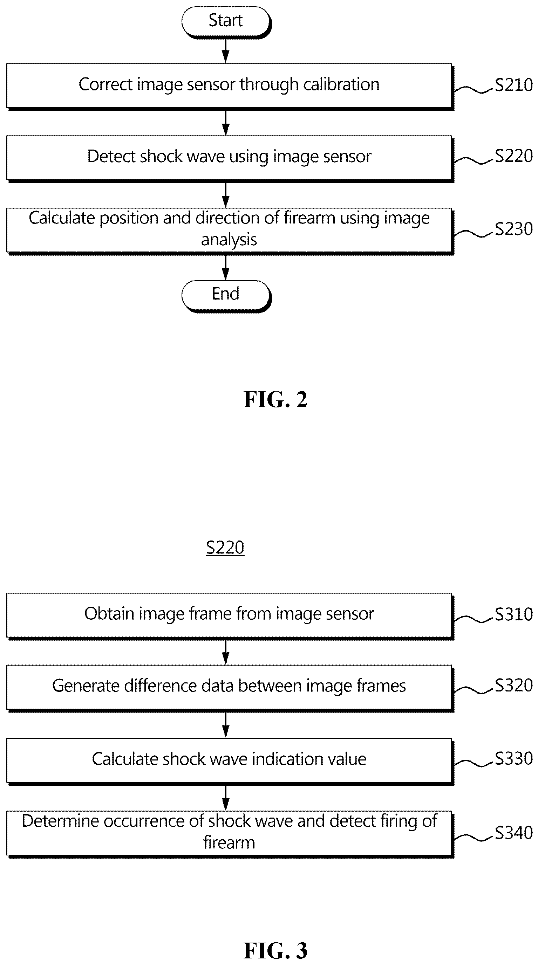

FIG. 2 is an operational flowchart showing a process of image sensor calibration, shock wave detection, and calculation of position & direction of firearms according to one embodiment of the present invention.

FIG. 2 may show a process of image sensor calibration, shock wave detection, and calculation of position & direction of firearms according to one embodiment of the present invention, in which correction of the image sensor 110 on which calibration is performed may correct image distortion (S210). The server 120 may include correction of image distortion based on marker recognition information of the calibration structure 150 and predefined three-dimensional reference coordinates in an environment in which the plurality of image sensors 110 are installed.

After the calibration is completed, the server 120 may detect a shock wave by analyzing the difference data collected using the image sensor 110 (S220). Specifically, the server 120 may obtain image frames in real time through the image sensor 110 installed to face an expected point of shock wave generation. The image sensor 110 may capture image frames at specific time intervals, and these frames may provide high-resolution image frames capable of capturing even a small change occurring within a space. The server 120 may identify an environmental change or a movement of an object due to a physical shock through the image frame.

After that, difference data may be generated between a plurality of frames having a time interval based on the obtained image frame. The difference data may be generated by calculating a change in values corresponding to the same pixel coordinates of each frame, and may numerically represent a magnitude and direction of a change between a plurality of frames.

In addition, the generated difference data may be used to calculate a shock wave indication value through an artificial intelligence learning model for detecting a shock wave. The artificial intelligence learning model may learn various shock situations in advance and determine the intensity and occurrence of a shock wave in real time based on a shock wave indication value.

Then, the data obtained in real time through the image sensor 110 may detect and analyze the shock wave generated from the firearm 140 to calculate the position and direction of the firearm 140 (S230). The artificial intelligence learning model may extract two-dimensional barrel recognition information of the firearm 140 from image frames collected in real time, and combine data obtained from the plurality of image sensors 110 to accurately calculate a three-dimensional position and a firing direction of the firearm 140. In this process, a three-dimensional vector indicating a firing direction of the firearm 140 and a three-dimensional coordinate of the muzzle may be calculated by combining data between frames simultaneously collected by the plurality of image sensors 110. Through this, the artificial intelligence learning model may track the position and firing direction of the firearm 140 in real time, and may perform a more precise analysis by combining the same with shock wave detection data.

Finally, the calculated shock wave indication value and the three-dimensional position and firing direction information of the firearm 140 may be used as data for determining whether the shock wave has been actually generated at an expected point of shock wave generation. When the shock wave indication value exceeds a preset reference value, it may be determined that the shock wave has been generated. On the contrary, when the shock wave indication value is less than or equal to the reference value, it may be determined that no shock wave has been generated. This data may provide a reference for calculating the firing position and direction of the firearm 140, and through this, rapid and accurate shock wave detection and tracking of the firearm 140 may be possible.

The artificial intelligence learning model may detect a shock wave based on data obtained by using the image sensor 110 monitored in real time from the expected point of shock wave generation and calculate the position and direction of the firearm 140.

FIG. 3 is an operational flowchart showing a method for detecting a shock wave using an image sensor according to one embodiment of the present invention.

FIG. 3 may show a method for detecting a shock wave using an image sensor according to one embodiment of the present invention, in which an image frame may be obtained while monitoring an environment in real time, in which a shock wave is likely to be generated, using the image sensor 110 (S310).

Then, the server 120 may generate difference data by analyzing a difference between image frames obtained from each of the image sensors 110 (S320). The difference data may be generated based on a pixel value difference and a motion vector value between a plurality of frames. Through this, the server 120 may precisely measure a change between the plurality of frames to determine the possibility of generating the shock wave, and may detect a minute environmental change caused by the shock wave.

When the difference data is generated, the same may be input to an artificial intelligence learning model to calculate a shock wave indication value (S330). The artificial intelligence learning model may analyze the difference data based on the pre-learned data, and thus may calculate an indication value indicating whether a shock wave has been generated or not.

Finally, the artificial intelligence learning model of the server 120 may finally determine whether the shock wave has been generated or not based on the calculated shock wave indication value (S340). Whether the shock wave has been generated or not may be determined according to whether the shock wave instruction value exceeds a preset reference value or not. When the reference value is exceeded, the artificial intelligence learning model may detect the generation of the shock wave and issue a warning or execute a follow-up action. This process may be performed in real time, thereby minimizing a risk caused by the shock wave and detecting and responding to a point of shock wave generation, which may occur in various environments, in real time.

As an optional embodiment, the multiple image sensor 110 may simultaneously obtain image frames at various angles. The multiple image sensor 110 may be disposed at different positions, respectively, to detect the same point of shock wave generation in various directions. Through this, the image sensors 110 affected by the shock wave may obtain different image frames, and may simultaneously collect multi-sided pieces of information when the shock wave is generated. Through this, it may be possible to provide data at the point of shock wave generation and contribute to more precisely analyzing the point of shock wave generation.

In addition, in order to determine the point of shock wave generation, the arrival time and intensity of the shock wave may be calculated using data provided by the multiple image sensor 110. Each image sensor 110 may individually detect a time at which the shock wave is transmitted and an intensity thereof, based on which information detected by each image sensor 110 may be compared and analyzed. A difference in time for the shock wave to reach each image sensor 110 and a difference in intensity of the shock wave may be calculated. Through this data, a position of shock wave generation and a traveling direction thereof may be calculated. For example, a point at which the shock wave has been generated may be tracked based on data of the image sensor 110 at which the shock wave reaches first, and a diffusion path of the shock wave may be predicted.

Furthermore, the server 120 may analyze the shock wave-related data collected from the multiple image sensor 110 and determine that a shock wave has been generated when the shock wave indication value exceeds a set reference value. The shock wave indication value may be a predetermined value, and a reference value may be determined in consideration of the magnitude and speed of the shock wave.

As an optional embodiment, the image frame may exactly reflect the shaking of a camera system caused by the shock wave, while an image stabilization technology is deactivated. The image stabilization technology may be generally a technology for preventing the camera system from being affected by an external shock or shaking, but it may be more important to exactly reflect the shaking data of the camera system in the shock wave detection. If the camera experiences shaking when a shock wave is generated, this shaking information may be important data associated with the shock wave. Through this, the server 120 may track the magnitude or directionality of the shock wave based on this data, and may precisely reflect an actual environment when the shock wave is generated.

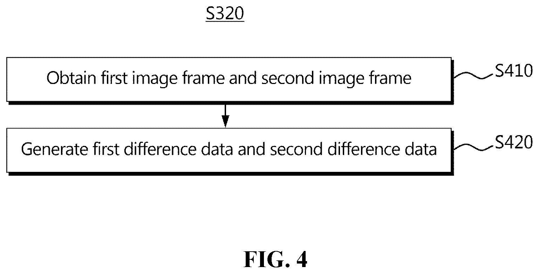

FIG. 4 is an operational flowchart showing a method for detecting a shock wave using an image sensor according to another embodiment of the present invention.

FIG. 4 may show a method for detecting a shock wave using an image sensor according to another embodiment of the present invention, in which the server 120 may generate difference data between a first image frame obtained at a first time point and an n-th image frame obtained at an n-th time point later than the first time point among several image frames obtained through the image sensor 110 (S410).

The generated difference data may provide important basic data for shock wave detection and analysis, and may provide essential information for determining whether a change captured by the image sensor 110 is caused by a shock wave or not.

Specifically, the server 120 may generate first difference data based on a pixel value difference between the first image frame and the n-th image frame, and generate n-th difference data by analyzing a motion between the plurality of frames as a vector value (S420).

The artificial intelligence learning model of the server 120 may calculate a shock wave indication value by inputting a sequence of difference data. For example, at least one of the first difference data and the n-th difference data may be input to the artificial intelligence learning model to calculate the shock wave indication value. Through this, the artificial intelligence learning model may learn the shock wave data in various environments in advance, and analyze the feature points extracted from the sequence of difference data to identify a pattern of environmental changes according to the shock wave generation.

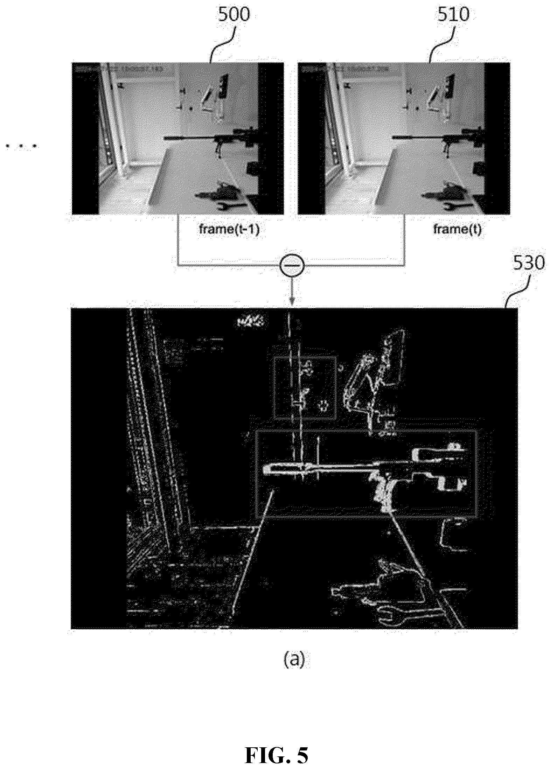

FIG. 5 is a view for describing a process of generating difference data between image frames according to one embodiment of the present invention.

FIG. 5 may show a process of generating difference data between image frames according to one embodiment of the present invention, in which an image frame (t-1) 500 and an image frame (t) 510 may be obtained as shown in FIG. 5(a). The image frame (t-1) 500 and the image frame (t) 510 may be images captured with a time difference, and each of frames may represent data at a time point captured by the image sensor 110. The image frame (t-1) 500 may represent an image frame captured at a previous time point, and an image frame (t) 510 may represent an image frame captured at a subsequent time point.

In the plurality of frames, difference data 530 may be generated based on various forms such as a change in each pixel value or a motion vector, and through this, a changed region in which a difference is generated between the frames may be extracted. For example, it may be specified as a point (a red box in 530) where there is a possibility that a shock has been generated within the image frame.

In addition, the difference data 530 may be used as input data of the artificial intelligence learning model. Through this, the artificial intelligence learning model for detecting a shock wave may utilize the difference data 530 generated based on a difference between the frames taken at a time interval to calculate a shock wave indication value and determine whether a shock wave has been generated or not.

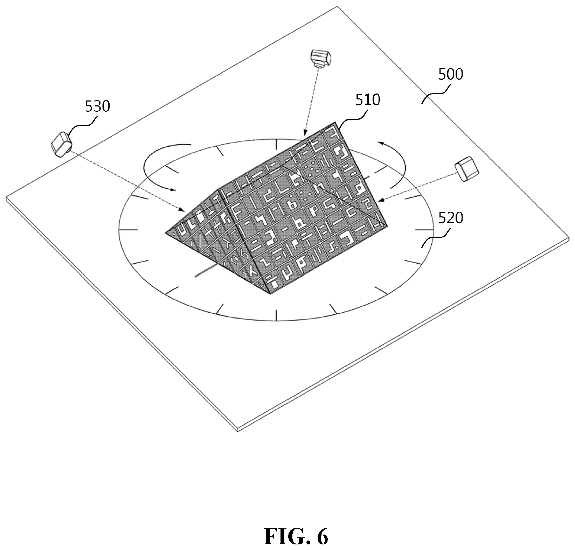

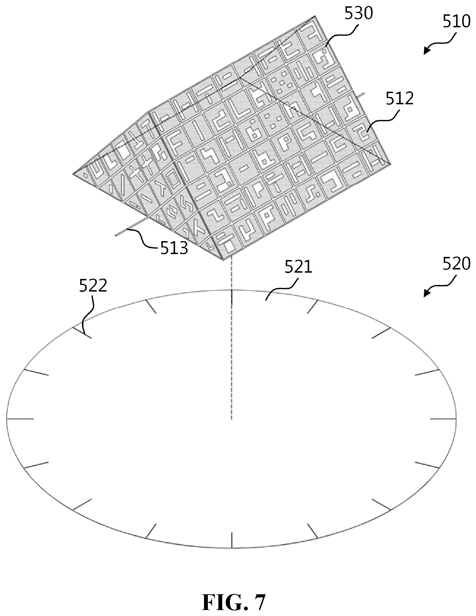

FIGS. 6 and 7 are views for describing a calibration structure according to one embodiment of the present invention.

Referring to FIGS. 6 and 7, a calibration method for a plurality of image sensors according to one embodiment of the present invention, components may be checked through the following calibration structure configuration diagram 600.

First, a marker holder 611 of a marker holder structure 610 may be configured in the form of a triangular prism, and a reference marker or a recognizable pattern 612 may be disposed on each surface. All of these markers may include markers that may be differently identified in response to unique identification information.

A guide scale 613 may be located between the marker holder 611 and a circular plate 621 to indicate a circular plate scale 622 of the circular plate 621.

A circular plate structure 620 may be designed to have a structure in which the circular plate 621 and the marker holder 611 may be coupled and rotated, and a circular plate scale 622 may be displayed on a surface of the circular plate 621.

In addition, the circular plate scale 622 may be displayed at a predetermined angle, and may be indicated through the guide scale 613.

A camera 630 may allow each image sensor 110 to capture the marker holder 611 and the circular plate 621 at various angles. The camera 630 may record a recognizable pattern 612 of the marker holder 611 in different directions to collect the position and direction information data of each image sensor 110. Through this, distortion of an image may be minimized, and more precise three-dimensional coordinates may be calculated.

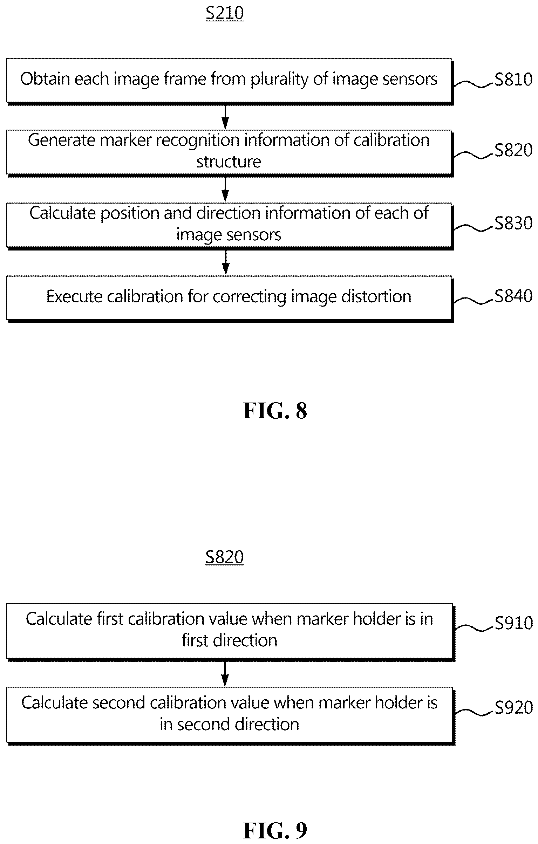

FIG. 8 is an operational flowchart showing a calibration method of a plurality of image sensors according to one embodiment of the present invention.

Referring to FIG. 8, in the calibration method of a plurality of image sensors according to one embodiment of the present invention, the plurality of image sensors 110 may be installed to recognize a calibration structure 150 disposed at any one specific point from different positions and directions, and each image sensor 110 may obtain each image frame at a corresponding point at various angles (S810).

The calibration structure 150 may include a two-dimensional marker, and the corresponding marker may be recognized from each image frame captured by the image sensor 110, and through this, two-dimensional marker recognition information may be generated (S820). The two-dimensional marker recognition information may be based on the coordinates, pattern, and shape of the marker appearing in the image frame, and may identify the relative position and direction of the marker recognized by each image sensor 110.

Then, the server 120 may calculate the accurate position and direction information of each image sensor 110 by using the three-dimensional reference coordinates predefined in response to the calibration structure 150 (S830). Here, the three-dimensional reference coordinates may include a position at which each image sensor 110 is actually located and a direction in which the image sensor 110 faces, based on the position of the calibration structure 150.

Finally, the server 120 may perform a calibration process for correcting image distortion by integrating the two-dimensional marker recognition information generated from each image sensor 110 and the position and direction information of each image sensor 110 calculated based thereon (S840). Through this, the calibration process may minimize image distortion that may be generated according to the positions and angles of the image sensors 110, and may help the image sensor 110 to collect accurate images.

FIG. 9 is an operational flowchart showing a calibration method of a plurality of image sensors according to anther embodiment of the present invention.

Referring to FIG. 9, by the calibration method of a plurality of image sensors according to another embodiment of the present invention, the plurality of image sensors 110 may photograph the calibration structure 150 placed at any one specific point in different positions and directions, and each image sensor 110 may obtain an additional image frame according to a changed direction of the marker holder 611. The additional image frame may include data obtained from various directions of the marker holder 611, and through this, information on the position and direction of the image sensor 110 may be collected.

The marker holder 611 may have a polyhedral structure and include a plurality of markers on each surface. The plurality of markers may be designed with a reference marker and a recognizable pattern 612. Each image sensor 110 may recognize a plurality of markers positioned on each surface in various directions.

In addition, even when the calibration structure 150 is at a fixed position, each surface of the marker holder 611 may be recognized in various directions. In other words, even when the marker holder 611 rotates or is disposed at various angles, the plurality of image sensors 110 may photograph markers positioned on various surfaces. Through this, each image sensor 110 may collect a wider range of data while recognizing various surfaces of the marker holder 611.

As an optional embodiment, the server 120 may calculate a first calibration value when the marker holder 611 is in a first direction (S910). In addition, the server 120 may calculate a second calibration value when the marker holder 611 is in a second direction (S920). Through this, the server 120 may collect multilateral correction data through calibration values in various directions, and more precisely correct image distortion of the image sensor 110.

As an optional embodiment, the plurality of image sensors 110 may obtain an image frame in real time by tracking a marker that changes while the marker holder 611 rotates or moves at each position. Through this, the server 120 may use the corresponding image frame for image distortion correction to adjust the position and direction between the image sensors 110 and perform synchronization between the image sensors 110.

As an optional embodiment, the three-dimensional reference coordinate may first set one reference coordinate to know relative position information of each marker. This reference coordinate may be set based on the center or major axis of the calibration structure 150, and each marker may indicate a position in a three-dimensional space through its distance and direction from this reference. Through this, each image sensor 110 may perform data collection based on the same reference coordinate system, thereby increasing the consistency and accuracy of data.

As an optional embodiment, a direction indicator installed at the marker holder 611 of the calibration structure 150 may clearly indicate a direction of the marker holder 611, and the position of each marker may be more accurately recognized when the image sensor 110 performs calibration. The direction indicator may easily recognize the direction of the marker holder 611 when the image sensor 110 faces the calibration structure 150 in a specific direction. Through this, the image sensor 110 may recognize the marker in consideration of directionality in the calibration process, thereby increasing the accuracy of data.

As an optional embodiment, the calibration structure 150 may include the marker holder 611 and a rotation base which supports the same and is rotatable. This structure may be designed such that the marker holder 611 may be aligned with and mounted on the center of the rotation base and may rotate at various angles along a central axis of the rotation base. In addition, the design of the rotation base may ensure the stability of the marker holder 611, and the image sensor 110 may collect a wider range of data. Such a structure may easily obtain data at various angles required in the calibration process. Through this, the image sensor 110 may detect the marker holder 611 at various angles, and may maximize the accuracy of the calibration by utilizing data collected from different perspectives.

As an optional embodiment, the rotation base may include a guide scale 613 for adjusting a rotation angle of the marker holder 611. The guide scale 613 may be a tool which helps the user to precisely set an angle of the marker holder 611, and may be designed to easily read the angle in a visual manner. This structure may help the image sensor 110 to recognize a relative position of the marker according to angles, thereby further increasing the accuracy of data collected during the calibration process. The user may consistently adjust the rotation angle of the marker holder 611 through the guide scale 613, thereby collecting data at various angles. Through this, the obtained data may improve the quality of the calibration.

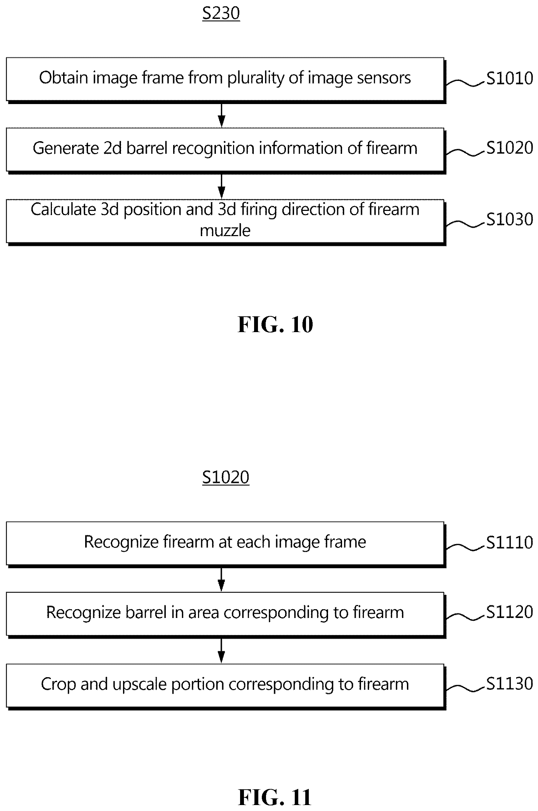

FIG. 10 is an operational flowchart showing a method for calculating a position and direction of firearms using image analysis according to one embodiment of the present invention.

Referring to FIG. 10, in the method for calculating a position and direction of firearms using image analysis according to one embodiment of the present invention, the plurality of image sensors 110 may be configured to recognize a point at which the same shock is expected to be generated in different directions, and respective image frames may be obtained from the image sensors 110 (S1010). This arrangement may allow a point of shock wave generation to be detected from various angles, and through this, various visual information may be provided.

The server 120 may analyze each image frame obtained from each image sensor 110 to generate information capable of recognizing a firearm 140 and a two-dimensional barrel of the firearm 140 in the corresponding frame (S1020). Here, the two-dimensional barrel recognition information may include visual data such as a shape, a length, a direction and the like of the barrel shown in the image frame, and through this, physical features of the firearm 140 may be extracted.

After that, the server 120 may combine the two-dimensional barrel recognition information generated from each image frame based on the accurate position and direction information of the image sensors 110 to calculate coordinates in a three-dimensional space where the muzzle of the firearm 140 is located, and a three-dimensional firing direction (S1030). Through this, the server 120 may analyze the two-dimensional barrel recognition information collected at various positions to calculate the three-dimensional position and firing direction of the muzzle.

FIG. 11 is an operational flowchart showing a method for calculating a position and direction of firearms using image analysis according to another embodiment of the present invention.

Referring to FIG. 11, by the method for calculating a position and direction of firearms using image analysis according to another embodiment of the present invention, the server 120 may obtain an image frame corresponding to the same time point from each of the image sensors 110. The server 120 may obtain an image frame in real time from each of the image sensors 110 installed to face an expected point of shock wave generation, and generate difference data between a plurality of frames having a time interval based on the image frames. The server 120 may calculate a shock wave indication value from the difference data based on an artificial intelligence model for detecting a shock wave. Through this, it may be possible to determine whether the shock wave has been generated or not at the expected point of shock wave generation.

Then, the server 120 may recognize the shape and structure of the firearm 140 by making an analysis based on each of the image frames collected from each image sensor 110 (S1110). In addition, the server 120 may distinguish an area including the firearm 140 from other backgrounds or objects by processing image frames obtained by photographing the firearm 140 at various angles. Furthermore, after recognizing the firearm 140 in each image frame, an area corresponding to the barrel in the area of the firearm 140 may be specifically recognized (S1120).

Finally, the server 120 may perform a more precise analysis through a process of cropping and upscaling the area corresponding to the barrel of the firearm 140 (S1130). The extracted barrel area portion may be upscaled to a higher resolution.

The barrel may be one of the main components of the firearm 140 and may provide important information in calculating the direction and position of firing. A two-dimensional inclination angle of the barrel and a two-dimensional coordinate corresponding to the barrel may be calculated through image analysis of the image frame, and the recognized barrel information may be utilized as data for calculating a three-dimensional firing direction and barrel position thereafter. Through this, when the resolution of the image increases, the server 120 may accurately detect even a minute change in the angle or shape of the barrel, and thus the three-dimensional position and firing direction of the barrel of the firearm 140 may be calculated.

As an optional embodiment, the image frame may include an image frame corresponding to a time point at which a shockwave is determined to have been generated based on at least one of the image sensors 110. Through this, unnecessary data may be reduced, and an accurate time point at which the shock wave has been generated may be known.

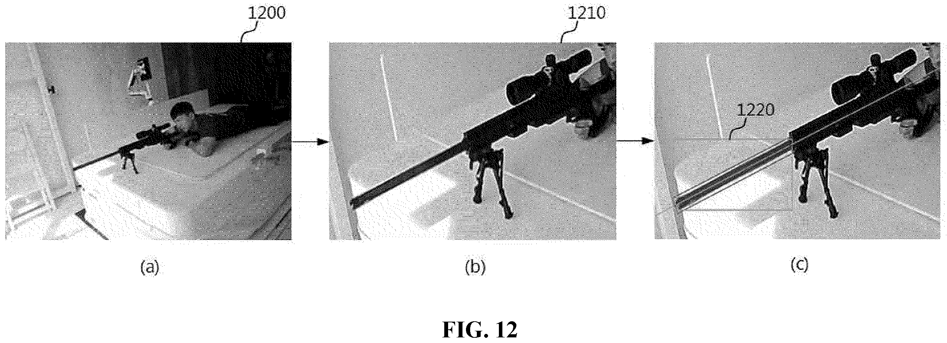

FIG. 12 is a view for describing a process of generating barrel recognition information of firearms according to one embodiment of the present invention.

Referring to FIG. 12, images for describing a process of generating barrel recognition information of firearms according to one embodiment of the present invention may be shown.

First, as shown in FIG. 12(a), the server 120 may recognize an image frame 1200 to which the firearm 140 belongs in each image frame. Through this, the server 120 may recognize the barrel of the firearm 140 in the area corresponding to the firearm 140 in the image frame 1200.

Then, as shown in FIG. 12(b), the server 120 may recognize the firearm 140, and then crop a portion corresponding to the firearm 140 in the image frame 1200 and upscale the cropped image 1210.

Finally, as shown in FIG. 12C, the server 120 may obtain a two-dimensional inclination angle of the barrel and a two-dimensional coordinate corresponding to the muzzle based on a green box 1220 corresponding to the barrel in each image frame, and calculate a three-dimensional position and a three-dimensional firing direction of the barrel therethrough.

As an optional embodiment, the server 120 may calculate a three-dimensional vector indicating a firing direction of the firearm 140 and also calculate a three-dimensional coordinate indicating a position of the muzzle of the firearm 140 by combining a two-dimensional inclination angle of the barrel calculated from each image frame
As an optional embodiment, the server 120 may generate a three-dimensional barrel object of the firearm 140 by combining the two-dimensional barrel recognition information generated in each image frame.

In addition, the server 120 may calculate a three-dimensional vector indicating a firing direction of the firearm 140 and a three-dimensional coordinate indicating a muzzle position of the firearm 140, based on the three-dimensional barrel object of the firearm 140.

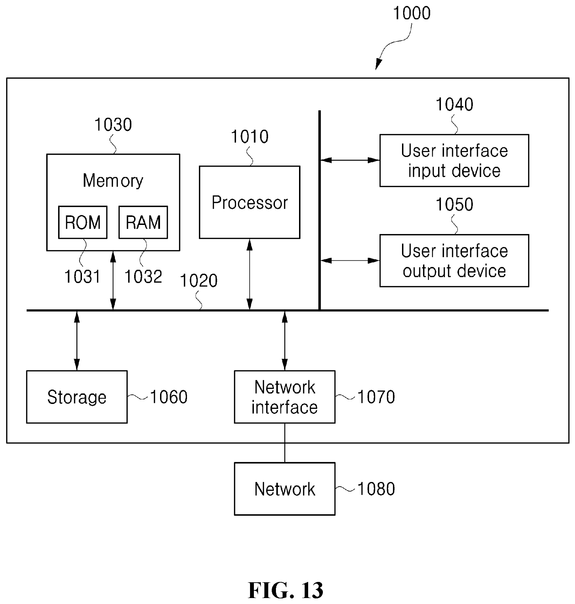

FIG. 13 is a view showing a computer system of a server according to one embodiment of the present invention.

Referring to FIG. 13, a computer system 1000 of the server may include at least one processor 1010, a memory 1030, a user interface input device 1040, a user interface output device 1050, and a storage 1060, which communicate with each other via a bus 1020. In addition, the computer system 1000 may further include a network interface 1070 connected to a network 1080. The processor 1010 may be a central processing unit or a semiconductor device for executing processing instructions stored in the memory 1030 or the storage 1060. The memory 1030 and the storage 1060 may be various types of volatile or nonvolatile storage media. For example, the memory may include ROM 1031 or RAM 1032.

The specific executions described in the present invention are examples and are not intended to limit the scope of the present invention in any way. For the sake of brevity, description of conventional electronic configurations, control systems, software, and other functional aspects of the systems may be omitted. In addition, connection or connection members of lines between components shown in the drawings are exemplarily shown as functional connections and/or physical or circuit connections, and may be illustrated as various alternative or additional functional connections, physical connections, or circuit connections in an actual device. In addition, if there is no specific mention such as "essential," "important" or the like, it may not be an essential component for the application of the present invention.

Thus, the spirit of the present invention should not be limited to the above-described embodiments, and it will be said that not only the patent claims to be described later, but also all the ranges equivalent to or equivalently changed therefrom belong to the scope of the spirit of the present invention.

According to the present invention, it can be possible to accurately calculate the three-dimensional position and three-dimensional firing direction of the muzzle of a firearm by obtaining respective image frames from a plurality of image sensors, generating two-dimensional barrel recognition information of the firearm, and utilizing position and direction information of the image sensors and the two-dimensional barrel recognition information generated from each of the image frames, thereby providing industrial applicability.

## Claims

1. A method for calculating position and direction of a firearm using image analysis, the method comprising:
obtaining respective image frames from a plurality of image sensors configured to capture images of the same expected point of shock wave generation from different positions in different directions;
generating two-dimensional barrel recognition information of a firearm from each of the image frames; and
calculating a three-dimensional position of a muzzle of the firearm and a three-dimensional firing direction based on position and direction information of the image sensors and the two-dimensional barrel recognition information generated from each of the image frames.

2. The method of claim 1, wherein the obtaining of the image frames includes
obtaining image frames corresponding to the same time point from the image sensors.

3. The method of claim 1, wherein the obtaining of the image frames includes
obtaining an image frame corresponding to a time point at which a shockwave is determined to have been generated based on at least one of the image sensors.

4. The method of claim 1, wherein the obtaining of the image frames includes,
after obtaining image frames in real time from an image sensor installed to face the expected point of shock wave generation, generating difference data between a plurality of frames having time intervals based on the image frames,
calculating a shockwave indication value from the difference data based on an artificial intelligence learning model for shockwave detection, and
determining whether a shockwave has occurred at the expected point of shock wave generation based on the shockwave indication value.

5. The method of claim 1, wherein the generating of the two-dimensional barrel recognition information includes
recognizing the firearm in each of the image frames; and
recognizing a barrel among regions corresponding to the firearm in each of the image frames.

6. The method of claim 5, wherein the generating of the two-dimensional barrel recognition information includes,
after recognizing the firearm, cropping a portion corresponding to the firearm in the image frame; and
upscaling the cropped image.

7. The method of claim 1, wherein the generating of the two-dimensional barrel recognition information includes
calculating a two-dimensional inclination angle of the barrel and a two-dimensional coordinate corresponding to a muzzle based on a region corresponding to the barrel in each of the image frames.

8. The method of claim 7, wherein the calculating of the three-dimensional position and three-dimensional firing direction of the muzzle includes
combining the two-dimensional inclination angles of the barrel calculated from each of the image frames to calculate a three-dimensional vector indicating the firing direction of the firearm, and combining the two-dimensional coordinate of the muzzle calculated from each of the image frames to calculate a three-dimensional coordinate indicating the muzzle position of the firearm.

9. The method of claim 1, wherein the calculating of the three-dimensional position and three-dimensional firing direction of the muzzle includes
combining the two-dimensional barrel recognition information generated from each of the image frames to generate a three-dimensional barrel object of the firearm; and
calculating a three-dimensional vector indicating the firing direction of the firearm and a three-dimensional coordinate indicating the muzzle position of the firearm based on the three-dimensional barrel object.

10. An apparatus for calculating position and direction of a firearm using image analysis, the apparatus comprising:
a memory in which at least one program is recorded; and
a processor for executing the program, wherein
the program includes instructions for:
obtaining respective image frames from a plurality of image sensors configured to capture images of the same expected point of shock wave generation from different positions in different directions;
generating two-dimensional barrel recognition information of a firearm from each of the image frames;
calculating a three-dimensional position of a muzzle of the firearm and a three-dimensional firing direction based on position and direction information of the image sensors and the two-dimensional barrel recognition information generated from each of the image frames; and
providing firearm position and direction information using image analysis through a user application.
